Europäisches Patentamt

European Patent Office

Office européen des brevets

(19)

(11) Numéro de publication: **0 313 425**

**A1**

(12) # DEMANDE DE BREVET EUROPEEN

(21) Numéro de dépôt: 88402437.3

(22) Date de dépôt: 27.09.88

(51) Int. Cl.⁴: **D 06 F 69/00**

(30) Priorité: 23.10.87 FR 8714705

(43) Date de publication de la demande:
26.04.89 Bulletin 89/17

(84) Etats contractants désignés:
AT BE CH DE ES GB GR IT LI LU NL SE

(71) Demandeur: **Société MECASONIC**
**Z.I. Rue de Foran B.P. 218 Ville La Grand**
**F-74105 Annemasse (FR)**

(72) Inventeur: **Pariguet, Jean-Louis**
**2, rue de la Paix**
**F-74100 Annemasse (FR)**

**Yametti, Charles**
**Résidence du moulin**
**F-49450 Saint Macaire en Manges (FR)**

**Gorguet, Michel**
**Chez Puilet-Lucinges**
**F-74380 Bonne (FR)**

(74) Mandataire: **Armengaud Ainé, Alain**
**Cabinet ARMENGAUD AINE 3 Avenue Bugeaud**
**F-75116 Paris (FR)**

(54) Dispositif de mise en forme de feuilles souples en nappe et notamment de tissu par ultra-sons.

(57) Procédé de mise à plat de matériaux en feuilles souples, se présentant sous la forme de nappes (A, B), notamment en vue de réaliser l'ouverture et le repassage de coutures, ledit procédé consistant, après mise en forme des deux bords libres des feuilles (D, E) assemblées par couture (C), à réaliser un repassage par ultrasons en utilisant une sonotrode ultrasonique (10, 12) dont la fréquence est choisie de manière à provoquer un échauffement contrôlé des deux couches de tissu.

Fig.3

EP 0 313 425 A1

Bundesdruckerei Berlin

## Description

### Dispositif de mise en forme de feuilles souples en nappe et notamment de tissus par ultra-sons

La présente invention est relative à un procédé et à un dispositif de mise en forme et à plat de matériaux en feuilles souples se présentant sous la forme de nappes, notamment en vue de réaliser l'ouverture et le repassage de coutures.

On sait que dans l'industrie de l'habillement, un grand nombre d'articles d'habillement comportent ce qu'il est convenu d'appeler des coutures ouvertes : il s'agit des coutures d'assemblage entre deux nappes de tissu pour lesquelles on a rabattu les deux bandes de largeur de couture de part et d'autre de cette couture. Ces coutures d'assemblage se rencontrent notamment dans les coutures de côtés de robes, de jupes, de jambes de pantalons, etc. Il est nécessaire de réaliser l'ouverture puis le repassage de telles coutures afin d'obtenir une déformation permanente ou non après mise en forme.

A l'heure actuelle, l'ouverture et le repassage des coutures sont effectués manuellement en utilisant, soit un fer à repasser, soit tout autre moyen thermique (vapeur, infra-rouges, etc) lors d'une opération qui est réalisée après exécution de la piqûre d'assemblage. L'opération de mise à plat telle qu'elle est actuellement réalisée, exige un contrôle précis de la température et du temps d'application afin d'éviter d'endommager, notamment par brûlure, les étoffes à repasser, ce qui n'est pas toujours facile, notamment lorsque ces dernières sont constituées de tissus synthétiques. Par ailleurs, le temps d'ouverture et de repassage des coutures est important. En effet, il représente généralement la moitié du temps consacré à l'exécution de la couture sur machine à coudre.

On a été amené à réaliser des dispositifs permettant de réaliser simultanément le piquage et l'ouverture de la couture qui comportent par ailleurs des systèmes de repassage à la vapeur placés derrière le pied presseur de la machine à coudre. On arrive ainsi à diminuer les temps de mise en forme et mise à plat des coutures, cependant de tels dispositifs sont d'un fonctionnement délicat et, en outre, la vapeur utilisée lors du repassage détériore rapidement par corrosion les équipements utilisés.

La présente invention se propose d'apporter un procédé et un dispositif nouveau permettant en particulier de réduire de façon notable les temps d'ouverture et de repassage de telles coutures, et donc les coûts de fabrication, et d'autre part, d'éliminer tout risque de corrosion.

En conséquence, la présente invention a tout d'abord pour objet un procédé de mise à plat de matériaux en feuilles souples, se présentant sous la forme de nappes, notamment en vue de réaliser l'ouverture et le repassage de coutures, ce procédé étant caractérisé en ce qu'il consiste, après mise en forme des deux bords libres des feuilles assemblées par couture, à réaliser un repassage par ultrasons en utilisant une sonotrode ultrasonique dont la fréquence est choisie de manière à provoquer un échauffement contrôlé des deux couches de tissu.

On comprend que la présente invention se caractérise notamment par la mise en oeuvre d'un système générateur d'ultrasons, remplaçant les dispositifs de repassage traditionnels pour réaliser la mise à plat de la couture suivie d'une déformation des "rabats" (c'est à dire des parties rabattues des nappes assemblées).

L'invention vise également un dispositif pour la mise en oeuvre du procédé ci-dessus qui est caractérisé en ce qu'il comporte un générateur d'ultrasons vibrant de préférence à une fréquence comprise entre 20 et 100 KHz et une enclûme rotative ou fixe entre lesquelles défilent les feuilles souples à mettre en forme après ouverture de la couture.

Selon un exemple de réalisation préféré, la présente invention apporte un dispositif conçu de façon à réaliser simultanément la couture puis le repassage de nappes de tissu sur des pièces d'habillement, qui est caractérisé en ce qu'il comprend une machine à coudre, de préférence une machine automatique à couture longue, des moyens permettant de réaliser l'ouverture de la couture immédiatement derrière le pied presseur de la machine à coudre et une sonotrode associée à une enclûme entre lesquelles passent les feuilles de tissu cousu après ouverture de la couture pour réaliser le repassage et la mise à plat permanente des rabats de cette couture.

D'autres caractéristiques et avantages de la présente invention ressortiront de la description faite ci-après en référence aux dessins annexés qui en illustrent divers exemples de réalisation dépourvus de tout caractère limitatif.

Sur les dessins :

- Les figures 1 et 2 sont des vues schématiques illustrant les étapes principales du procédé objet de cette invention ;

- Les figures 3 et 4 sont respectivement des vues en élévation latérale et en bout d'un système générateur d'ultrasons à molettes pulsantes utilisé selon la présente invention pour le repassage des coutures ;

- Les figures 5 et 6 sont des vues respectivement en élévation latérale et en bout illustrant un second exemple de réalisation de l'invention mettant en oeuvre un générateur d'ultrasons constitué d'une sonotrode fixe associée à une enclûme rotative ;

- Les figures 7 et 8 sont respectivement des vues en élévation latérale et en bout représentant un troisième exemple de réalisation de l'invention dans lequel le dispositif comporte un générateur d'ultrasons comprenant une sonotrode à vibrations horizontales associée à une enclûme rotative et

- La figure 9 est une vue schématique en élévation latérale d'une machine selon l'invention permettant de réaliser simultanément la couture, l'ouverture de la couture et la mise à plat de cette dernière par repassage par ultrasons.

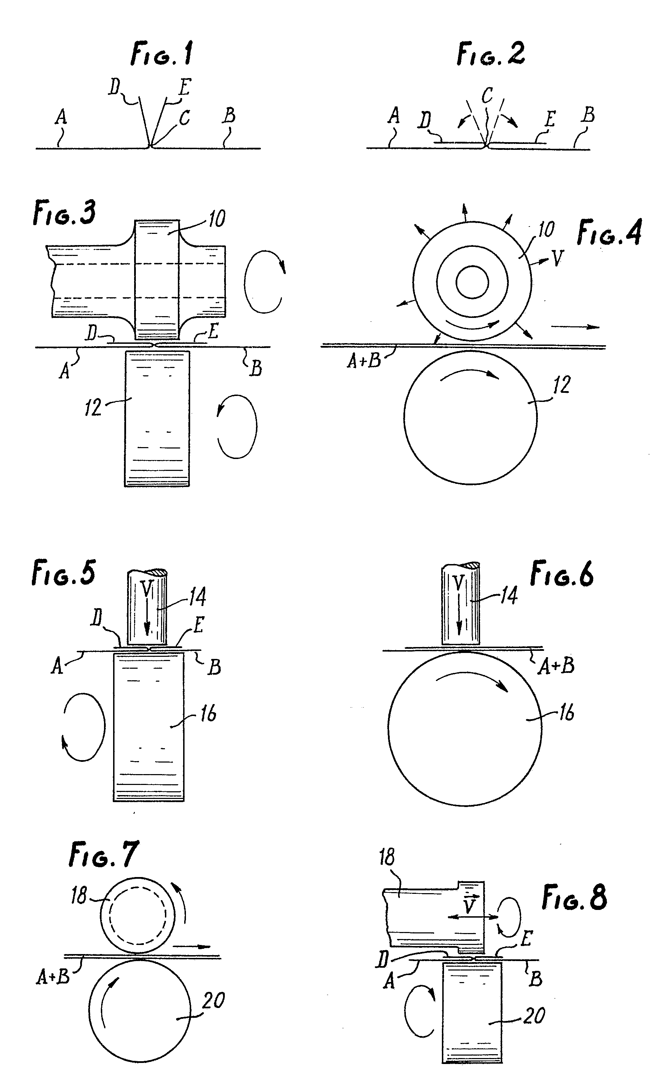

On se réfère en premier lieu aux figures 1 et 2 qui illustrent les étapes du procédé objet de cette invention.

Lors de la première étape (figure 1), deux nappes de tissu A et B sont réunies par une piqûre C réalisée notamment sur une machine à coudre ou par soudage, collage ou tout autre procédé connu. Les deux bords libres D et E appelés rabats, des nappes de tissu ainsi assemblées, sont automatiquement mis en forme (ouverture de la couture) en utilisant de préférence un guide puis ces deux rabats D et E (figure 2) sont mis à plat en utilisant selon l'invention un chauffage par ultrasons qui permet de réaliser un repassage de la couture. On réalise ainsi une mise à plat des deux rabats D et E sur les nappes correspondantes de tissu A et B.

Selon l'invention, on peut utiliser différents systèmes générateurs d'ultrasons pour effectuer la mise à plat par repassage de la couture.

Sur les figures 3 à 8, on a représenté trois exemples de réalisation non limitatifs de systèmes générateurs ultrasons utilisés selon la présente invention.

Dans le premier exemple de réalisation illustré par les figures 3 et 4, on met en oeuvre une molette pulsante 10, du type décrit dans le certificat d'utilité français 76 18 221 déposé par le présent titulaire. A cette molette pulsante 10, est associée une enclûme rotative 12 qui tourne à la même vitesse linéaire que la molette vibrante 10. Les tissus A et B cousus ensemble défilent donc entre la molette pulsante 10 et l'enclûme rotative 12 de manière à repasser et mettre à plat les rabats D et E. De préférence, la molette 10 vibre à une fréquence qui est comprise entre 20 KHz et 100 KHz suivant une direction radiale V.

L'amplitude de la vibration ultrasonique et la vitesse de défilement des nappes de tissu A et B sont réglables en fonction notamment de la nature des tissus (synthétiques, naturels ou mélangés), du tissage et de l'épaisseur des tissus à repasser.

On comprend que la mise à plat par repassage des deux nappes de tissu A et B résulte de la combinaison des deux effets suivants obtenus par l'action de la molette vibrante :

a) un effet thermique résultant de l'absorption de l'énergie vibratoire par le tissu qui se traduit par un échauffement local au niveau de la couture et des rabats D et E ;

b) un effet mécanique du au martellement à haute fréquence du tissu sous l'action de la vibration mécanique de la molette pulsante.

On obtient ainsi une déformation instantanée pouvant être permanente, des matériaux ainsi traités.

Selon une variante de cet exemple de réalisation, on peut également utiliser deux molettes pulsantes du même type que la molette 10 représentée sur les figures 3 et 4 et une enclûme rotative, ce qui permet d'une part de doubler les effets procurés par l'énergie vibratoire et, d'autre part, d'augmenter la vitesse de défilement des nappes de tissu. Cette variante avec double molette est particulièrement recommandée pour réaliser le repassage de coutures de tissu présentant des fortes épaisseurs.

Dans le second exemple de réalisation de l'invention, illustré par les figures 5 et 6, on utilise une sonotrode fixe 14 qui vibre longitudinalement selon la direction V et qui est associée à une enclûme massive rotative 16. Comme précédemment, les nappes de tissu cousues A et B défilent entre la sonotrode 14 et l'enclûme 16 afin de réaliser la mise à plat par repassage par les ultrasons des deux rabats D et E. De préférence, la sonotrode fixe 14 vibre selon une fréquence qui est comprise entre 20 KHz et 100 KHz.

Dans le troisième exemple de réalisation de l'invention, illustré par les figures 7 et 8, le dispositif selon la présente invention comporte une sonotrode rotative 18 vibrant horizontalement selon la direction V (on peut utiliser une sonotrode servant au soudage des métaux) et une enclûme 20 qui tourne à la même vitesse linéaire que la sonotrode rotative 18. Comme précédemment, les deux nappes de tissu A et B défilent en continu entre la sonotrode 18 et son enclûme 20. Dans cet exemple de réalisation, l'effet de vibration horizontal produit un échauffement des nappes de tissu à assembler par frottement, le résultat de mise en forme étant identique à celui qui est obtenu par l'absorption d'énergie lors de l'utilisation d'une molette pulsante conformément à l'exemple de réalisation décrit ci-dessus en référence aux figures 3 et 4.

Le procédé et le dispositif objet de cette invention peuvent être appliqués industriellement en vue d'effectuer le repassage en continu de nappes d'étoffe synthétique, naturelle, mélangée, renforcée, enduite ou autres. Le procédé permet de contrôler séparément et de manière précise les paramètres suivants notamment : amplitude de la vibration des sonotrodes utilisées, vitesse de défilement des nappes de tissu cousues, fréquence de vibration des sonotrodes, ce contrôle pouvant être réalisé en mettant en oeuvre des techniques modernes, notamment des microprocesseurs en fonction de l'épaisseur de la structure et de la nature des matériaux traités.

Les essais réalisés par la présente titulaire ont montré que les plis obtenus après mise à plat par repassage des rabats pouvaient être de nature permanente et qu'il était possible d'atteindre des vitesses de repassage de l'ordre de 20 mètres/minute et plus, dans le cas d'une application à la plupart des textiles courants, y compris la laine.

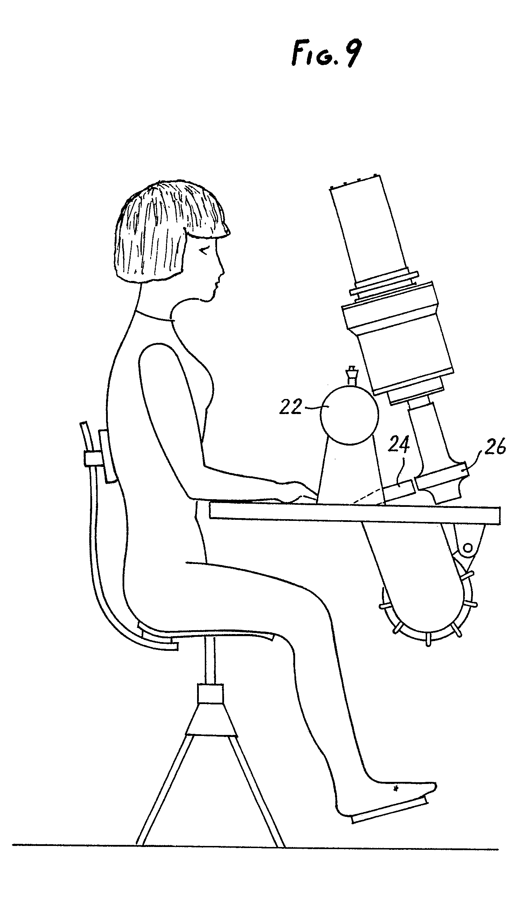

Le dispositif selon la présente invention peut être réalisé sous la forme d'un système intégré incorporant une machine à coudre et un générateur d'ultrasons permettant de réaliser le repassage de la couture. Un tel système est représenté de façon schématique sur la figure 9. On voit qu'il comporte essentiellement les trois composants suivants :
Une machine à coudre 22 pouvant être une machine automatique à couture longue ;
Un dispositif 24 qui réalise immédiatement derrière le pied presseur l'ouverture de la couture qui vient d'être effectué par la machine à coudre et
Une sonotrode 26 pouvant être de l'un quelconque des types décrits ci-dessus pour réaliser le repassage des rabats de la couture.

Le dispositif selon la présente invention peut être appliqué notamment au repassage de coutures de pièces d'habillement, d'emballages, de sacs, de bâches, de tauds, de couvertures, de couvertures de piscines, etc, cette énumération n'étant pas limitative.

Il demeure bien entendu que la présente invention n'est pas limitée aux divers exemples de réalisation décrits ci-dessus mais qu'elle en englobe toutes les variantes.

**Revendications**

1- Procédé de mise à plat de matériaux en feuilles souples, se présentant sous la forme de nappes, notamment en vue de réaliser l'ouverture et le repassage de coutures, ce procédé étant caractérisé en ce qu'il consiste, après mise en forme des deux bords libres des feuilles assemblées par couture, à réaliser un repassage par ultrasons en utilisant une sonotrode ultrasonique dont la fréquence est choisie de manière à provoquer un échauffement contrôlé des deux couches de tissu.

2- Procédé selon la revendiction 1, caractérisé en ce que les vibrations ultrasoniques sont parallèles aux matériaux cousus.

3- Procédé selon la revendication 1, caractérisé en ce que les vibrations sont perpendiculaires aux matériaux cousus.

4- Dispositif pour la mise en oeuvre d'un procédé selon la revendication 1, caractérisé en ce qu'il comporte une sonotrode ultrasonique réalisée sous la forme d'une molette (10) pulsante, associée à une enclûme rotative (12) tournant à la même vitesse linéaire que la molette pulsante, les deux nappes (A, B) pourvues de la couture (C) à repasser défilant en continu entre ladite molette et ladite enclûme.

5- Dispositif pour la mise en oeuvre d'un procédé selon la revendication 1, caractérisé en ce qu'il comporte une sonotrode ultrasonique réalisée sous la forme d'une sonotrode fixe (14) vibrant longitudinalement et d'une enclûme rotative massive 16, les deux nappes (A, B) pourvues de la couture (C) à repasser défilant en continu entre cette sonotrode et son enclûme associée.

6- Dispositif pour la mise en oeuvre d'un procédé selon la revendication 1, caractérisé en ce qu'il comporte une sonotrode ultrasonique réalisée sous la forme d'une sonotrode (18) à vibrations horizontales, tournant autour de son axe et une enclûme rotative 20, tournant à la même vitesse linéaire que la sonotrode, les deux nappes (A, B) pourvues de la couture (C) à repasser défilant en continu entre ladite sonotrode et ladite enclûme.

7- Dispositif pour la mise en oeuvre d'un procédé selon la revendication 1, caractérisé en ce qu'il comporte une sonotrode ultrasonique réalisée sous la forme de deux molettes pulsantes vibrant suivant une direction radiale et d'une enclûme rotative tournant à la même vitesse linéaire que lesdites molettes vibrantes, les deux nappes (A, B) pourvues de la couture (C) à repasser, défilant en continu entre ladite sonotrode double et ladite enclûme.

8- Dispositif conçu de façon à réaliser simultanément la couture puis le repassage de nappes de tissu sur des pièces d'habillement mettant en oeuvre le procédé selon l'une quelconque des revendications 1 à 3, caractérisé en ce qu'il comprend une machine à coudre (22), de préférence une machine automatique à couture longue, des moyens (24) permettant de réaliser l'ouverture de la couture immédiatement derrière le pied presseur de la machine à coudre et une sonotrode (26) associée à une enclûme entre lesquelles passent les nappes de tissu cousu après ouverture de la couture pour réaliser le repassage et la mise à plat permanente des rabats de cette couture.

9- Dispositif selon l'une quelconque des revendications 4 à 8, caractérisé en ce que la fréquence des générateurs d'ultrasons utilisés est comprise entre 20 KHz et 100 KHz.

10- Dispositif selon l'une quelconque des revendications 4 à 9, caractérisé en ce que l'amplitude de la vibration ultrasonique et la vitesse de défilement des nappes de tissu à repasser sont fonction de la nature, du tissage et de l'épaisseur des tissus.

Fig.1

Fig.2

Fig.3

Fig.4

Fig.5

Fig.6

Fig.7

Fig.8

# Fig. 9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| A | US-A-3990163 (AULICH ET AL) | | D06F69/00 |
| | --- | | |
| A | US-A-2699616 (GOLD ) | | |
| | --- | | |
| A | US-A-1477547 (DENEMARK ) | | |
| | --- | | |
| A | JP-A-45-13193 (TOKYO JUKI KOGYO KK ) | | |
| | ----- | | |

**DOMAINES TECHNIQUES RECHERCHES (Int. Cl.4 )**

**D06F**

Le présent rapport a été établi pour toutes les revendications

| Lieu de la recherche | Date d'achèvement de la recherche | Examinateur |
|---|---|---|
| LA HAYE | 8 FEVRIER 1989 | BOURSEAU A.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)